# EUROPÄISCHE PATENTSCHRIFT

(11) **EP 3 774 464 B1**
(45) Veröffentlichungstag und Bekanntmachung des Hinweises auf die Patenterteilung: **01.12.2021**
(21) Anmeldenummer: 19715839.7
(22) Anmeldetag: 22.03.2019
(51) Int. Cl.: B60T 13/68, B60T 13/66, B60T 8/32, B60T 8/00, B60T 7/12

(54) **ELEKTRO-PNEUMATISCHER ACHSMODULATOR MIT DIREKT GESTEUERTEN VENTILEN**
ELECTRO-PNEUMATIC AXLE MODULATOR WITH DIRECT CONTROLLED VALVES
MODULATEUR D'ESSIEUX ELECTRO-PNEUMATIQUE AVEC PILOTAGE DIRECT DES VALVES

(30) Priorität: 05.04.2018 DE 102018108090
(43) Veröffentlichungstag der Anmeldung: 17.02.2021
(73) Patentinhaber: ZF CV Systems Hannover GmbH, 30453 Hannover (DE)
(72) Erfinder: VAN THIEL, Julian, 30938 Grossburgwedel (DE); GENSINK, Jan, 30826 Garbsen (DE)
(74) Vertreter: Rabe, Dirk-Heinrich
(86) Internationale Anmeldenummer: PCT/EP2019/057189
(87) Internationale Veröffentlichungsnummer: WO 2019/192856

(56) Entgegenhaltungen:
- EP-A2- 0 345 203
- DE-C1- 4 132 768

## Beschreibung

Die Erfindung betrifft ein elektropneumatisches Bremssteuermodul, mit einem Vorratsanschluss zum Anschließen eines Druckluftvorrats; einem ersten Radbremsanschluss und einem zweiten Radbremsanschluss; einer pneumatisch gesteuerten Einlass-Auslass-Ventileinheit zum Aussteuern eines ersten Bremsdrucks an dem ersten Radbremsanschluss und eines zweiten Bremsdrucks an dem zweiten Radbremsanschluss, der unabhängig vom ersten Bremsdruck ist; und einer elektropneumatischen Vorsteuereinheit zum Aussteuern wenigstens eines Hauptsteuerdrucks an einem Hauptventil der Einlass-Auslass-Ventileinheit.

Ein derartiges elektropneumatisches Bremssteuermodul wird auch als Zweikanal-Achsmodulator bezeichnet und dient dazu, radindividuell Drücke zwischen linken und rechten Rädern einer Achse auszugeben. Sie kommen sowohl in Nutzfahrzeugen als auch in Personenfahrzeugen zum Einsatz.

Ein ähnliches elektropneumatisches Bremssteuermodul ist aus DE 10 2010 010 606 A1 bekannt. Die dort offenbarte Drucksteuervorrichtung zeichnet sich dadurch aus, dass sie ein einziges Relais-Ventil beinhaltet, mit einem von einem Vorratsdruck versorgten Vorratsanschluss, einem mit einer Drucksenke in Verbindung stehenden Entlüftungsanschluss, einem Steueranschluss und wenigstens zwei Arbeitsanschlüssen, wobei der eine Arbeitsanschluss wenigstens einen Bremszylinder eines Rades einer Fahrzeugseite der Achse und der andere Arbeitsanschluss des Relais-Ventils wenigstens einen Bremszylinder eines Rades der anderen Fahrzeugseite der Achse zugeordnet ist; jeder Arbeitsanschluss des Relais-Ventils mit einem von einem Steuergerät direkt oder indirekt gesteuerten und jeweils einer Fahrzeugseite zugeordneten 2/2-Wegeventil verbunden ist, welches abhängig von der Ansteuerung durch das Steuergerät entweder eine Verbindung zwischen dem betreffenden Arbeitsanschluss des Relais-Ventils und dem zugordneten Bremszylinder herstellt oder diese Verbindung sperrt, und ferner der Steueranschluss des Relais-Ventils mittels einer durch ein 3/2-Wegemagnetventil oder durch zwei 2/2-Wegemagnetventile gebildeten und mittels des Steuergeräts gesteuerten Ventileinrichtung entweder mit einem Fahrerbremswunsch abhängig gebildeten Bremssteuerdruck, mit einem Vorratsdruck eines Druckreservoirs oder mit einer Drucksenke verbindbar ist. Nachteilig an dieser Lösung ist das Relais-Ventil, das insgesamt bauraumaufwendig ist und daher besteht Bedarf daran, das Relais-Ventil zu ersetzen.

Eine Lösung, die ohne Relais-Ventil auskommt, ist in DE 2014 006 614 A1 offenbart. Die dort offenbarte pneumatische Bremseinrichtung für Kraftfahrzeuge umfasst wenigstens ein Belüftungsventil und ein Entlüftungsventil, elektrisch betätigbare Aktivierungsmittel zur Aktivierung des Belüftungsventils und oder des Entlüftungsventils, einer Steuerlogik mit Mitteln zur Erzeugung eines Stellsignals für das Aktivierungsmittel entsprechend einem Vorgabewert für den Sollbremsdruck, wobei das Belüftungsventil und sein Aktivierungsmittel derart ausgebildet sind, dass der pneumatische Druck aus dem Vorratsspeicher im betätigten Zustand des Belüftungsventils direkt an die jeweilige Radbremse durchsteuerbar ist und/oder das Entlüftungsventil den Bremsdruck an der Radbremse im betätigten Zustand direkt in die Atmosphäre entlüftet. In dem in DE 2014 006 614 A1 dargestellten Ausführungsbeispiel ist also für eine Radbremse (das heißt linke oder rechte Radbremse) zwei pneumatisch haltbare 2/2-Wegeventile sowie eine Vorsteuereinheit mit zwei elektrisch schaltbaren 3/2-Wegeventilen zur jeweiligen Aussteuerung von Steuerdrücken für die zwei 2/2-Wegeventile vorgesehen. Auch diese Lösung ist kosten- und bauraumaufwendig und daher besteht Bedarf daran, diese zu vereinfachen. Zu einem anderen Thema offenbart die Veröffentlichung DE4132768 C1, nach dem Oberbegriff des Anspruchs 1, eine elektronisch geregelte Druckmittel-Bremseinrichtung für wenigstens einen Bremskreis eines Fahrzeuges. Die Bremseinrichtung weist mindestens ein Betriebsbremsventil und mindestens einen eine elektronische Regeleinrichtung ansteuernden elektrischen Sollwertgeber, die gemeinsam über ein Bremspedal betätigbar sind, und einen Radbremszylinder für jedes in diesem Bremskreis zu bremsende Rad auf. Außerdem EP0345203 A2 offenbart eine elektronisch geregelte Druckmittel-Bremseinrichtung für wenigstens einen Bremskreis eines Fahrzeuges, mit mindestens einem Betriebsbremsventil und einem elektrischen Sollwertgeber, die gemeinsam über ein Bremspedal betätigbar sind, und mit einem Radbremszylinder für jedes in diesem Bremskreis zu bremsende Rad, der/die mittels einer von einer elektronischen Regeleinrichtung steuerbaren Elektromagnetventileinheit über einen Hauptbremskreis direkt oder über einen Nebenbremskreis und das Betriebsbremsventil mit einer Druckmittelquelle verbindbar ist/sind.

Es ist daher eine Aufgabe der vorliegenden Erfindung ein einfaches, kosten- und bauraumoptimiertes elektropneumatisches Bremssteuermodul der eingangs genannten Art bereitzustellen.

Die Erfindung löst die Aufgabe bei einem elektropneumatischen Bremssteuermodul der eingangs genannten Art dadurch, dass das Hauptventil der Einlass-Auslass-Ventileinheit als pneumatisch steuerbares 3/2-Wegeventil mit einem Hauptventil-Steueranschluss ausgebildet ist.

Hierdurch kann eine weitere Vereinfachung stattfinden, da insgesamt ein Hauptventil, die zu diesem Hauptventil gehörende Vorsteuereinheit sowie die dazu gehörenden entsprechenden Endstufen in der Elektronik entfallen können. Der Bauraum kann hierdurch verringert werden und insgesamt wenigstens zwei Ventile eingespart werden. Auch die Kosten sind hierdurch reduziert.

Erfindungsgemäß weist das Hauptventil einen mit dem Vorratsanschluss verbundenen Hauptventil-Vorratsanschluss, einen Hauptventil-Arbeitsanschluss zum Aussteuern eines Arbeitsdrucks und einen mit einer Entlüftung verbundenen Hauptventil-Entlüftungsanschluss auf. Vorzugsweise ist das Hauptventil drucklos in einer mit der in einer Entlüftungsstellung, bei der der Hauptventil-Arbeitsanschluss mit dem Hauptventil-Entlüftungsanschluss verbunden ist.

Ferner ist bevorzugt, dass die Einlass-Auslass-Ventileinheit ein erstes Bremsventil zum Aussteuern des ersten Bremsdrucks und ein zweites Bremsventil zum Aussteuern des zweiten Bremsdrucks aufweist. Der erste Bremsdruck kann beispielsweise für ein rechtes Rad und der zweite Bremsdruck für ein linkes Rad derselben Achse vorgesehen sein.

Besonders bevorzugt ist hierbei, dass das erste Bremsventil einen mit dem Hauptventil verbundenen ersten Bremsventilanschluss und einen mit dem ersten Radbremsanschluss verbundenen zweiten Bremsventilanschluss aufweist; und das zweite Bremsventil einen mit dem Hauptventil verbundenen dritten Bremsventilanschluss und einen mit dem zweiten Radbremsanschluss verbundenen vierten Bremsventilanschluss aufweist. Auf diese Weise lässt sich das Hauptventil sowohl zum Belüften des ersten und zweiten Radbremsanschlusses als auch zum Entlüften der jeweiligen ersten und zweiten Radbremsanschlüsse nutzen. Wird das Hauptventil in eine Belüftungsstellung gebracht, kann mittels der ersten und zweiten Bremsventile beeinflusst werden, ob und wie stark der erste oder zweite Radbremsanschluss belüftet werden. Das Gleiche gilt auch für eine Entlüftungsstellung des Hauptventils; in dieser kann durch die ersten und zweiten Bremsventile entschieden werden, ob und wie stark der erste oder zweite Radbremsanschluss entlüftet werden soll.

In einer weiteren bevorzugten Ausgestaltung weist das erste Bremsventil einen mit der Vorsteuereinheit verbundenen ersten Bremsventil-Steueranschluss auf, an dem ein erster Steuerdruck durch die Vorsteuereinheit aussteuerbar ist. Vorzugsweise ist in einer ersten drucklosen Schaltstellung des ersten Bremsventils der erste Bremsventilanschluss mit dem zweiten Bremsventilanschluss verbunden und das erste Bremsventil in einer zweiten Schaltstellung geschlossen. Das heißt, sobald der erste Steuerdruck einen vorbestimmten Schwellwert des ersten Bremsventils überschreitet, schaltet das erste Bremsventil in eine geschlossene Schaltstellung. Auf diese Weise lässt sich der erste Radbremsanschluss in einer drucklosen Schaltstellung, bei Wegfall des ersten Steuerdrucks, entlüften und somit wird verhindert, dass bei einem Wegfall des Steuerdrucks eine entsprechende Radbremse zugespannt wird.

In übereinstimmender Weise weist vorzugsweise auch das zweite Bremsventil einen mit der Vorsteuereinheit verbundenen zweiten Bremsventilsteueranschluss auf, an dem ein zweiter Steuerdruck durch die Vorsteuereinheit aussteuerbar ist. Auch das zweite Bremsventil ist vorzugsweise in einer ersten drucklosen Schaltstellung offen, sodass der dritte Bremsventilanschluss mit dem vierten Bremsventilanschluss verbunden ist und in einer zweiten Schaltstellung geschlossen. Für das zweite Bremsventil gilt vorzugsweise dasselbe wie für das erste Bremsventil. Insofern schaltet auch das zweite Bremsventil in die geschlossene Schaltstellung, wenn der zweite Steuerdruck einen vorbestimmten Schwellwert des zweiten Bremsventils überschreitet.

In einer bevorzugten Ausgestaltung der Erfindung weist die Vorsteuereinheit ein Haupt-Steuerventil auf, das einen mit dem Vorratsanschluss verbundenen Haupt-Steuerventilanschluss, einen mit dem Hauptventil-Steueranschluss verbundenen zweiten Haupt-Steuerventilanschluss und einen mit einer Entlüftung verbundenen dritten Haupt-Steuerventilanschluss auf. Das erste Haupt-Steuerventil dient folglich vorzugsweise zur Steuerung des Hauptventils. Das heißt, für das Hauptventil ist nur ein einziges Steuerventil, nämlich das erste Haupt-Steuerventil vorgesehen, sodass in der Vorsteuereinheit ein Steuerventil entfallen kann.

Vorzugsweise weist die Vorsteuereinheit ferner ein erstes Brems-Steuerventil für den ersten Bremsdruck auf, das einen mit dem Vorratsanschluss verbundenen ersten Brems-Steuerventilanschluss, einen mit dem ersten Bremsventilsteueranschluss verbundenen zweiten Brems-Steuerventilanschluss und einen mit einer Entlüftung verbundenen dritten Brems-Steuerventilanschluss aufweist. Das erste Brems-Steuerventil ist folglich für das erste Bremsventil vorgesehen und stellt den entsprechenden ersten Steuerdruck für dieses bereit.

In entsprechender Weise weist die Vorsteuereinheit bevorzugt ferner ein zweites Brems-Steuerventil auf, das für den zweiten Bremsdruck vorgesehen ist. Das zweite Brems-Steuerventil weist vorzugsweise einen mit dem Vorratsanschluss verbundenen vierten Brems-Steuerventilanschluss, einen mit dem zweiten Bremsventilsteueranschluss verbundenen fünften Brems-Steuerventilanschluss und einen mit einer Entlüftung verbundenen sechsten Brems-Steuerventilanschluss auf.

Ferner weist das elektropneumatische Bremssteuermodul vorzugsweise eine elektrische Steuereinheit mit einem elektrischen Anschluss zum Empfangen von Bremssignalen und zum Bereitstellen entsprechender Schaltsignale wenigstens an die Vorsteuereinheit auf. Die Ventile der Vorsteuereinheit, das heißt das Haupt-Steuerventil, das erste Brems-Steuerventil und das zweite Brems-Steuerventil sind vorzugsweise basierend auf einem ersten Schaltsignal, einem zweiten Schaltsignal und einem Hauptschaltsignal elektromagnetisch schaltbar. Diese Signale werden vorzugsweise von der elektrischen Steuereinheit bereitgestellt. Der elektrische Anschluss kann dazu dienen, die elektrische Steuereinheit an ein BUS-System des Fahrzeugs anzuschließen, oder direkt an eine übergeordnete Steuereinheit, beispielsweise ein Zentralmodul. An dem elektrischen Anschluss können direkt elektrische Signale empfangen werden, die das Schalten von Ventilen bewirken, oder nur ein Bremsanforderungssignal, das dann von der elektronischen Steuereinheit in entsprechende Schaltsignale umgesetzt wird, unter Bestimmung eines Soll-Bremsdrucks.

Weiter ist bevorzugt, dass das elektropneumatische Bremssteuermodul einen ersten Drucksensor aufweist, der dazu vorgesehen ist, den ersten Bremsdruck zu erfassen, und ein entsprechendes erstes Drucksignal bereitzustellen sowie einen zweiten Drucksensor aufweist, der dazu vorgesehen ist, den zweiten Bremsdruck zu erfassen und ein entsprechendes zweites Drucksignal bereitzustellen. Sowohl das erste als auch das zweite Drucksignal werden vorzugsweise von den entsprechenden Drucksensoren an der elektrischen Steuereinheit bereitgestellt. Hierdurch kann eine Druckregelung für den ersten und zweiten Radbremsanschluss erfolgen. Die elektrische Steuereinheit kann ferner das erste und zweite Drucksignal an übergeordnete Steuereinheiten, wie beispielsweise das Zentralmodul, weitergeben.

In einem zweiten Aspekt der Erfindung wird die eingangs genannte Aufgabe durch ein Verfahren zum Betrieb eines elektropneumatisches Bremssteuermoduls nach einer der vorstehend beschriebenen bevorzugten Ausführungsformen eines elektropneumatisches Bremssteuermoduls gemäß dem ersten Aspekt der Erfindung gelöst. Das Verfahren weist die Schritte auf: Empfangen eines Bremssignals; in Abhängigkeit des empfangenen Bremssignals: Aussteuern eines ersten Bremsdrucks an dem ersten Radbremsanschluss; und Aussteuern eines zweiten Bremsdrucks an dem zweiten Radbremsanschluss, der unabhängig vom ersten Bremsdruck ist. Vorzugsweise wird das Bremssignal von einem Zentralmodul oder einem anderen übergeordneten Modul bereitgestellt.

In einem dritten Aspekt der Erfindung wird die Eingangs genannte Aufgabe geöst durch ein Fahrzeug, insbesondere Nutzfahrzeug, mit einem elektropneumatischen Bremssteuermodul nach einer der vorstehend beschriebenen bevorzugten Ausführungsformen eines elektropneumatisches Bremssteuermoduls gemäß dem ersten Aspekt der Erfindung, geeignet zur Durchführung des Verfahrens gemäß dem zweiten Aspekt der Erfindung.

Es soll verstanden werden, dass das elektropneumatische Bremssteuermodul gemäß dem ersten Aspekt der Erfindung, das Verfahren gemäß dem zweiten Aspekt der Erfindung und das Fahrzeug gemäß dem dritten Aspekt der Erfindung gleiche und ähnliche Unteraspekte aufweisen, wie sie insbesondere in den abhängigen Ansprüchen niedergelegt sind. Insofern wird vollumfänglich auf die obige Beschreibung von einzelnen Merkmalen und deren Kombination sowie deren Vorteile verwiesen, da diese auch bevorzugte Ausführungsformen in dem zweiten und dritten Aspekt der Erfindung bilden.

Eine Ausführungsform der Erfindung wird nun nachfolgend anhand der Zeichnungen beschrieben. Diese sollen die Ausführungsform nicht notwendigerweise maßstäblich darstellen, vielmehr sind die Zeichnungen in schematisierter Form ausgeführt. Im Hinblick auf Ergänzungen der aus den Zeichnungen unmittelbar erkennbaren Lehre wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand.

Weitere Vorteile, Merkmale und Einzelheiten der Erfindung ergeben sich aus der nachfolgenden Beschreibung der bevorzugten Ausführungsform sowie anhand der Zeichnungen; diese zeigen in:
- Fig. 1: ein Ausführungsbeispiel der Erfindung; und
- Fig. 2: eine schematische Ansicht eines Fahrzeugs.

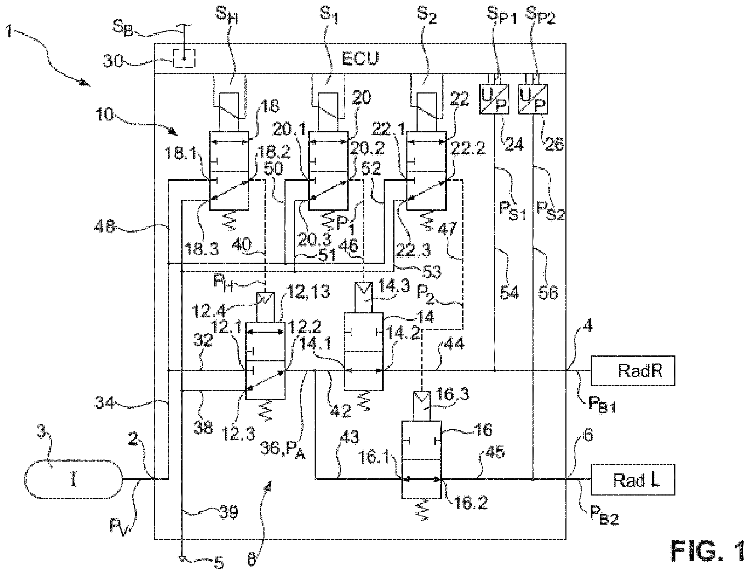

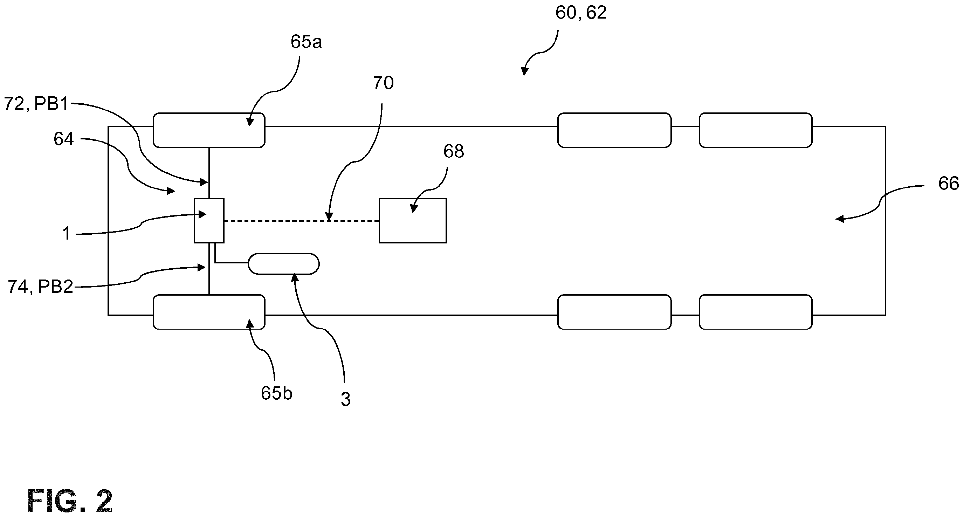

Gemäß Figur 1 weist ein elektropneumatisches Bremssteuermodul 1 einen Vorratsanschluss 2 zum Anschließen eines Druckluftvorrats 3 auf. Der Druckluftvorrat 3 stellt einen Vorratsdruck PV an dem Vorratsanschluss 2 bereit. Weiterhin weist das elektropneumatische Bremssteuermodul 1 einen ersten Radbremsanschluss 4 und einen zweiten Radbremsanschluss 6 auf, die für zwei Räder einer Achse vorgesehen sind. Beispielhaft ist in Fig. 1 der erste Radbremsanschluss 4 für ein (in Fahrtrichtung) rechtes Rad 65a (vgl. Fig. 2) vorgesehen, während der zweite Radbremsanschluss 6 für ein (in Fahrtrichtung) linkes Rad 65b vorgesehen ist.

Das elektropneumatische Bremssteuermodul 1 dient dazu, ein Bremssignal SB in einen ersten Bremsdruck pB1 und einen zweiten Bremsdruck pB2 für den ersten und zweiten Radbremsanschluss 4, 6 aufzuteilen. So ist eine radindividuelle Bremsung und Aussteuerung der ersten und zweiten Bremsdrücke pB1, pB2 möglich.

Zu diesem Zweck weist das elektropneumatische Bremssteuermodul 1 eine Einlass-Auslass-Ventileinheit 8 auf, die in diesem Fall rein pneumatisch gesteuert ausgebildet ist. Um diese pneumatisch gesteuerte Einlass-Auslass-Ventileinheit 8 zu steuern, weist das elektropneumatische Bremssteuermodul 1 eine elektropneumatische Vorsteuereinheit 10 auf. Die elektropneumatische Vorsteuereinheit 10 empfängt von einer elektrischen Steuereinheit ECU entsprechende Schaltsignale S1, S2, SH, die weiter unten genauer beschrieben werden. Basierend hierauf steuert die elektropneumatische Vorsteuereinheit 10 Steuerdrücke p1, p2, pH aus, die dann von der Einlass-Auslass-Ventileinheit 8 umgesetzt werden.

Im Einzelnen weist die Einlass-Auslass-Ventileinheit 8 ein Hauptventil 12 auf, das in diesem Ausführungsbeispiel als pneumatisch geschaltetes 3/2-Wegeventil 13 ausgebildet ist. Das Hauptventil 12 weist einen Hauptventil-Vorratsanschluss 12.1, einen Hauptventil-Arbeitsanschluss 12.2, einen Hauptventil-Entlüftungsanschluss 12.3 und einen Hauptventil-Steueranschluss 12.4 auf. Der Hauptventil-Vorratsanschluss 12.1 ist mit einer ersten pneumatischen Leitung 32 verbunden, die von einer Vorratsverteilleitung 34 abzweigt, die ihrerseits mit dem Vorratsanschluss 2 verbunden ist. An dem Hauptventil-Vorratsanschluss liegt also der Vorratsdruck pV an. Der Hauptventil-Arbeitsanschluss 12.2 ist mit einer Arbeitsdruckleitung 36 verbunden, in die von dem Hauptventil 12 ein Arbeitsdruck pA ausgesteuert wird. Der Hauptventil-Entlüftungsanschluss 12.3 ist mit einer ersten Entlüftungsleitung 38 verbunden, die in eine Entlüftungshauptleitung 39 mündet, die ihrerseits mit einer Entlüftung 5 verbunden ist. Der Hauptventil-Steueranschluss 12.4 ist mit einer Hauptsteuerleitung 40 verbunden, über die ein Hauptsteuerdruck pH an dem Hauptventil-Steueranschluss 12.4 aussteuerbar ist.

Das Hauptventil 12 ist als 3/2-Wegeventil 13 ausgebildet und weist daher zwei Schaltstellungen auf. In einer ersten in Fig. 1 gezeigten Schaltstellung ist der Hauptventil-Arbeitsanschluss 12.2 mit dem Hauptventil-Entlüftungsanschluss 12.3 verbunden, sodass die Arbeitsdruckleitung 36 entlüftet wird. Sobald der Hauptsteuerdruck pH einen vorbestimmten Schwellwert des Hauptventils 12 überschreitet, schaltet das Hauptventil 12 in die zweite in Fig. 1 nicht gezeigte Schaltstellung, in der der Hauptventil-Arbeitsanschluss 12.2 mit dem Hauptventil-Vorratsanschluss 12.1 verbunden ist, sodass der Vorratsdruck pV durch das Hauptventil 12 durch gesteuert wird und als Arbeitsdruck pA in der Arbeitsdruckleitung 36 ausgesteuert wird.

Die Einlass-Auslass-Ventileinheit 8 weist ferner ein erstes Bremsventil 14 und ein zweites Bremsventil 16 auf. Die ersten und zweiten Bremsventile 14, 16 dienen dazu, den Arbeitsdruck pA bedarfsgerecht als ersten und zweiten Bremsdruck pB1, pB2 an den entsprechenden ersten und zweiten Radbremsanschlüssen 4, 6 auszusteuern. Sowohl das erste als auch das zweite Bremsventil 14, 16 sind als pneumatisch schaltbare 2/2-Wegeventile ausgebildet.

Das erste Bremsventil 14 weist einen ersten Bremsventilanschluss 14.1 und einen zweiten Bremsventilanschluss 14.2 auf. Der erste Bremsventilanschluss 14.1 ist mit einer ersten Arbeitsverteilleitung 42 verbunden, die von der Arbeitsdruckleitung 36 abzweigt. Der erste Bremsventilanschluss 14.1 ist also mit dem Hauptventil 12 verbunden. Der zweite Bremsventilanschluss 14.2 ist mit einer ersten Bremsdruckleitung 44 verbunden, die ihrerseits mit dem ersten Radbremsanschluss 4 verbunden ist. Das erste Bremsventil 14 steuert also von dem zweiten Bremsventilanschluss 14.2 den ersten Bremsdruck pB1 in die erste Bremsdruckleitung 44 aus.

In ähnlicher Weise weist das zweite Bremsventil 16 einen dritten Bremsventilanschluss 16.1 und einen vierten Bremsventilanschluss 16.2 auf. Der dritte Bremsventilanschluss 16.1 ist mit einer zweiten Arbeitsverteilleitung 43 verbunden, die ebenfalls von der ersten Arbeitsdruckleitung 36 abzweigt. Insofern ist der dritte Bremsventilanschluss 16.1 mit dem Hauptventil 12 verbunden. Der vierte Bremsventilanschluss 16.2 ist mit einer zweiten Bremsdruckleitung 45 verbunden, die ihrerseits mit dem zweiten Bremsdruckanschluss 6 verbunden ist. Das zweite Bremsventil 16 steuert also in die zweite Bremsdruckleitung 45 den zweiten Bremsdruck pB2 aus.

Sowohl das erste Bremsventil 14 als auch das zweite Bremsventil 16 sind pneumatisch schaltbar und insofern weist das erste Bremsventil 14 einen mit der Vorsteuereinheit verbundenen ersten Bremsventilsteueranschluss 14.3 auf, an dem ein erster Steuerdruck p1 durch die Vorsteuereinheit 10 aussteuerbar ist. Zu diesem Zweck ist der erste Bremsventilsteueranschluss 14.3 mit einer ersten Steuerleitung 46 verbunden. Das erste Bremsventil 14 ist vorzugsweise drucklos in einer offenen Schaltstellung, die in Fig.1 gezeigt ist. Sobald der erste Steuerdruck p1 einen vorbestimmten Schwellwert des ersten Bremsventils überschreitet, schaltet das erste Bremsventil 14 in die geschlossene, in Fig. 1 nicht gezeigte Schaltstellung, in der der erste Bremsventilanschluss 14.1 und der zweite Bremsventilanschluss 14.2 getrennt sind.

In übereinstimmender Weise weist das zweite Bremsventil 16 einen zweiten Bremsventilsteueranschluss 16.3 auf, der mit der Vorsteuereinheit 10 verbunden ist. An dem zweiten Bremsventilsteueranschluss 16.3 wird durch die Vorsteuereinheit 10 ein zweiter Steuerdruck P2 ausgesteuert. Zu diesem Zweck ist der zweite Bremsventilsteueranschluss 16.3 mit einer zweiten Steuerleitung 47 verbunden. Das zweite Bremsventil 16 ist ebenfalls vorzugsweise in einer drucklosen in Fig. 1 gezeigten Schaltstellung offen. Sobald der zweite Steuerdruck p2 einen vorbestimmten Schwellwert des zweiten Bremsventils 16 überschreitet, schaltet das zweite Bremsventil 16 in die geschlossene in Figur 1 nicht gezeigte Schaltstellung, in der der dritte Bremsventilanschluss 16.1 und der vierte Bremsventilanschluss 16.2 getrennt sind.

Die Vorsteuereinheit 10 weist in diesem Ausführungsbeispiel drei Ventile auf, die jeweils einen Steuerdruck p1, p2, pH aussteuern. Für das Hauptventil 12 weist die Vorsteuereinheit 10 ein Haupt-Steuerventil 18 auf. Das Haupt-Steuerventil 18 ist als elektrisches schaltbares 3/2-Wegeventil ausgebildet und weist einen ersten Haupt-Steuerventilanschluss 18.1, einen zweiten Haupt-Steuerventilanschluss 18.2 und einen dritten Haupt-Steuerventilanschluss 18.3 auf. Der erste Haupt-Steuerventilanschluss 18.1 ist mit einer zweiten pneumatischen Leitung 48 verbunden, die von der Vorratsverteilleitung 34 abzweigt, sodass an den ersten Haupt-Steuerventilanschluss 18.1 der Vorratsdruck pV anliegt. Der zweite Haupt-Steuerventilanschluss 18.2 ist mit der Hauptsteuerdruckleitung 40 verbunden und steuert somit den Hauptsteuerdruck PH in diese aus. Der dritte Haupt-Steuerventilanschluss 18.3 ist mit einer zweiten Entlüftungsleitung 49 verbunden, die in die Entlüftungshauptleitung mündet. Das Haupt-Steuerventil 18 ist vorzugsweise stromlos in einer ersten in Fig. 1 gezeigten Schaltstellung, in der der zweite Haupt-Steuerventilanschluss 18.2 mit dem dritten Haupt-Steuerventilanschluss 18.3 verbunden ist, und die Hauptsteuerdruckleitung 40 somit entlüftet wird. Sobald das Haupt-Schaltsignal SH von der elektrischen Steuereinheit ECU bereitgestellt wird, schaltet das Haupt-Steuerventil 18 in die zweite in Figur 1 nicht gezeigte Schaltstellung und der erste Haupt-Steuerventilanschluss 18.1 ist mit dem zweiten Haupt-Steuerventilanschluss 18.2 verbunden, sodass in der Folge der Hauptsteuerdruck pH in die Hauptsteuerleitung 40 und in der Folge an dem Hauptventil-Steueranschluss 12.4 ausgesteuert wird.

Die Vorsteuereinheit 10 weist ferner ein erstes Brems-Steuerventil 20 für das erste Bremsventil 14 und ein zweites Brems-Steuerventil 22 für das zweite Bremsventil 16 auf. Sowohl das erste Brems-Steuerventil 20 als auch das zweite Brems-Steuerventil 22 sind als elektrisch schaltbare 3/2-Wegeventile ausgebildet.

Das erste Brems-Steuerventil 20 weist dementsprechend einen ersten Brems-Steuerventilanschluss 20.1, einen zweiten Brems-Steuerventilanschluss 20.2 und einen dritten Brems-Steuerventilanschluss 20.3 auf. Der erste Brems-Steuerventilanschluss 20.1 ist mit einer dritten pneumatischen Leitung 50 verbunden, die von der Vorratsverteilleitung 34 abzweigt. Somit liegt der Vorratsdruck pV an dem ersten Brems-Steuerventilanschluss 20.1 an. Der zweite Brems-Steuerventilanschluss 20.2 ist mit der ersten Steuerdruckleitung 46 verbunden, sodass über diesen der erste Steuerdruck p1 in die erste Steuerdruckleitung 46 ausgesteuert wird. Der dritte Brems-Steuerventilanschluss 20.3 ist mit einer dritten Entlüftungsleitung 51 verbunden, die in die Entlüftungshauptleitung 39 mündet. Das erste Brems-Steuerventil 20 ist vorzugsweise stromlos in der ersten in Fig. 1 gezeigten Schaltstellung, in der der zweite Brems-Steuerventilanschluss 20.2 mit dem dritten Brems-Steuerventilanschluss 20.3 verbunden ist, sodass die erste Steuerdruckleitung 46 entlüftet wird. Sobald das erste Schaltsignal S1 von der elektrischen Steuereinheit ECU bereitgestellt wird, schaltet das erste Brems-Steuerventil in die zweite in Fig. 1 nicht gezeigte Schaltstellung, in der der erste Brems-Steuerventilanschluss 20.1 mit dem zweiten Brems-Steuerventilanschluss 20.2 verbunden ist. In der Folge wird der erste Steuerdruck p1 in der ersten Steuerdruckleitung 46 ausgesteuert und folglich an dem ersten Bremsventilsteueranschluss 14.3 bereitgestellt.

In ähnlicher Weise weist das zweite Brems-Steuerventil 22 einen vierten Brems-Steuerventilanschluss 22.1, einen fünften Brems-Steuerventilanschluss 22.2 und einen sechsten Brems-Steuerventilanschluss 22.3 auf. Der vierte Brems-Steuerventilanschluss 22.1 ist mit einer vierten pneumatischen Leitung 52 verbunden, die von der Vorratsverteilleitung 34 abzweigt, sodass an dem vierten Brems-Steuerventilanschluss 22.1 der Vorratsdruck pV anliegt. Der fünfte Brems-Steuerventilanschluss 22.2 ist mit der zweiten Steuerdruckleitung 47 verbunden und steuert in diese den zweiten Steuerdruck p2 aus. Der sechste Brems-Steuerventilanschluss 22.3 ist mit einer vierten Entlüftungsleitung 53 verbunden, die ihrerseits in die Entlüftungshauptleitung 39 mündet. Stromlos ist das zweite Brems-Steuerventil 22 vorzugsweise in der ersten in Fig. 1 gezeigten Schaltstellung, in der der fünfte Brems-Steuerventilanschluss 22.2 mit dem sechsten Brems-Steuerventilanschluss 22.3 verbunden ist, die zweite Steuerdruckleitung 47 also entlüftet wird. Sobald das zweite Schaltsignal S2 von der elektrischen Steuereinheit ECU bereitgestellt wird. schaltet das zweite Brems-Steuerventil 22 in die zweite in Fig. 1 nicht gezeigte Schaltstellung und der fünfte Brems-Steuerventilanschluss 22.2 ist mit dem vierten Brems-Steuerventilanschluss 22.1 verbunden, sodass der zweite Steuerdruck p2 in die zweite Steuerdruckleitung 47 ausgesteuert wird und in der Folge an dem zweiten Bremsventilsteueranschluss 16.3 anliegt.

Zum Aussteuern der ersten und zweiten Bremsdrücke pB1, pB2 kann nun wie folgt vorgegangen werden: Sobald das Bremssignal SB an dem elektrischen Anschluss 30 der ECU bereitgestellt wird, wird zunächst das Hauptschaltsignal SH ausgegeben, in dessen Folge der Hauptsteuerdruck pH ausgesteuert wird und das Hauptventil 12 in die zweite in Fig. 1 nicht gezeigte Schaltstellung schaltet. Der Arbeitsdruck pA wird in die Arbeitsdruckleitung 36 ausgesteuert und liegt sowohl an dem ersten Bremsventilanschluss 14.1 als auch an dem dritten Bremsventilanschluss 16.1 an. Wenn beide Ventile, sowohl das erste als auch das zweite Bremsventil 14, 16 in der offenen in Fig. 1 gezeigten Schaltstellung sind, werden in gleicher Weise die Bremsdrücke pB1, pB2 gleichsinnig ausgesteuert. Soll allerdings einer der ersten und zweiten Bremsdrücke pB1, pB2 höher oder niedriger als der andere der ersten und zweiten Bremsdrücke pB1, pB2 sein, kann eines der ersten und zweiten Bremsventile 14, 16 geschlossen werden, indem das erste oder zweite Schaltsignal S1, S1 bereitgestellt werden. Sollen die ersten und zweiten Bremsdrücke pB1, pB2 aufrechterhalten werden, werden die ersten und zweiten Bremsventile 14, 16 nach Aussteuerung des Arbeitsdrucks pA geschlossen, sodass die ersten und zweiten Bremsdrücke pB1, pB2 eingesperrt werden. Nun kann das Hauptschaltsignal SH weggeschaltet werden, sodass das Hauptventil 12 in die erste in Fig. 1 gezeigte Schaltstellung zurückfällt und die Arbeitsdruckleitung 36 entlüftet wird. Durch entsprechendes Schalten der ersten und zweiten Bremsventile 14, 16 mittels Bereitstellung der ersten und zweiten Schaltsignale S1, S2 und Aussteuerung der ersten zweiten Steuerdrücke p1, p2, können nun der erste und zweite Radbremsanschluss 4, 6 entlüftet werden (auch gestuft entlüftet werden), um die ersten zweiten Bremsdrücke pB1, pB2 abzubauen.

Das Hauptventil 12 wird also in dieser Ausführungsform sowohl zur Belüftung des ersten als auch des zweiten Radbremsanschlusses 4, 6 benutzt als auch zur Entlüftung. Das Hauptventil 12 stellt also einen gemeinsames Be- und Entlüftungsventil sowohl für den ersten als auch für den zweiten Radbremsanschluss 4, 6 bereit.

Insgesamt kann in dieser Ausführungsform also gegenüber dem Stand der Technik ein Hauptventil sowie das entsprechende Vorsteuerventil und die Endstufen in der elektrischen Steuereinheit ECU entfallen.

Ferner ist in Fig.1 zu sehen, dass das elektropneumatische Bremssteuermodul 1 einen ersten Drucksensor 24 und einen zweiten Drucksensor 26 aufweist. Der erste Drucksensor 24 ist über eine erste Druckmessleitung 54 mit der ersten Bremsdruckleitung 44 verbunden, und der zweite Drucksensor 26 ist über eine zweite Druckmessleitung 56 mit der zweiten Bremsdruckleitung 45 verbunden. In der ersten Druckmessleitung 54 liegt also der erste Bremsdruck pB1 und in der zweiten Druckmessleitung der zweite Bremsdruck pB2 an. Die ersten und zweiten Drucksensoren 24, 26 stellen vorzugsweise entsprechende erste und zweite Drucksignale SP1, SP2 an der elektrischen Steuereinheit ECU bereit, die diese dann verarbeiten kann und/oder an einer übergeordneten Steuereinheit, wie beispielsweise einem Zentralmodul 68 (vgl. Fig. 2), bereitstellen kann.

Figur 2 zeigt nun ein Fahrzeug 60, genauer gesagt ein Nutzfahrzeug 62 mit einer Vorderachse 64 für ein rechtes Rad 65a und ein linkes Rad 65b. Darüber hinaus weist das Nutzfahrzeug zwei Hinterachsen 66 auf, auf die im Folgenden nicht weiter eingegangen wird. Das Nutzfahrzeug 62 verfügt über ein Zentralmodul 68, das über einen Fahrzeug-BUS 70 mit dem Elektropneumatisches Bremssteuermodul 1 verbunden ist, das hier als Vorderachsmodulator agiert.

Über den Fahrzeug-BUS wird ein Bremsanforderungssignal BS bereitgestellt, das dann von dem Elektropneumatisches Bremssteuermodul 1 in oben beschriebener Weise verarbeitet wird. In der Folge werden über eine erste Bremsleitung 72 der erste Bremsdruck BP1 an einer Radbremse des rechten Rads 65a, und über eine zweite Bremsleitung 74 der zweite Bremsdruck BP2 an einer Radbremse des linken Rads 65b ausgesteuert.

### Bezugszeichenliste (Bestandteil der Beschreibung)

- 1: Elektropneumatisches Bremssteuermodul
- 2: Vorratsanschluss
- 3: Druckluftvorratsanschluss
- 4: erster Radbremsanschluss
- 5: Entlüftung
- 6: zweiter Radbremsanschluss
- 8: Einlass-Auslass-Ventileinheit
- 10: elektropneumatische Vorsteuereinheit
- 12: Hauptventil
- 12.1: Hauptventil-Vorratsanschluss
- 12.2: Hauptventil-Arbeitsanschluss
- 12.3: Hauptventil-Entlüftungsanschluss
- 12.4: Hauptventil-Steueranschluss
- 13: 3/2-Wegeventil
- 14: erstes Bremsventil
- 14.1: erster Bremsventilanschluss
- 14.2: zweiter Bremsventilanschluss
- 14.3: erster Bremsventilsteueranschluss
- 16: zweites Bremsventil
- 16.1: dritter Bremsventilanschluss
- 16.2: vierter Bremsventilanschluss
- 16.3: zweiter Bremsventilsteueranschluss
- 18: Haupt-Steuerventil
- 18.1: erster Haupt-Steuerventilanschluss
- 18.2: zweiter Haupt-Steuerventilanschluss
- 18.3: dritter Haupt-Steuerventilanschluss
- 20: erstes Brems-Steuerventil
- 20.1: erster Brems-Steuerventilanschluss
- 20.2: zweiter Brems-Steuerventilanschluss
- 20.3: dritter Brems-Steuerventilanschluss
- 22: zweites Brems-Steuerventil
- 22.1: vierter Brems-Steuerventilanschluss
- 22.2: fünfter Brems-Steuerventilanschluss
- 22.3: sechster Brems-Steuerventilanschluss
- 24: erster Drucksensor
- 26: zweiter Drucksensor
- 30: elektrischer Anschluss
- ECU: elektrische Steuereinheit
- P1: erster Steuerdruck
- P2: zweiter Steuerdruck
- PA: Arbeitsdruck
- PB1: erster Bremsdruck
- PB2: zweiter Bremsdruck
- PH: Hauptsteuerdruck
- PV: Vorratsdruck
- S1: erstes Schaltsignal
- S2: zweites Schaltsignal
- SB: Bremssignal
- SH: Haupt-Schaltsignal
- SP1: erstes Drucksignal
- SP2: zweites Drucksignal
- 32: erste pneumatische Leitung
- 34: Vorratsverteilleitung
- 36: Arbeitsdruckleitung
- 38: erste Entlüftungsleitung
- 39: Entlüftungshauptleitung
- 40: Haupt-Steuerdruckleitung
- 42: erste Arbeitsverteilleitung
- 43: zweite Arbeitsverteilleitung
- 44: erste Bremsdruckleitung
- 45: zweite Bremsdruckleitung
- 46: erste Steuerdruckleitung
- 47: zweite Steuerdruckleitung
- 48: zweite pneumatische Leitung
- 49: zweite Entlüftungsleitung
- 50: dritte pneumatische Leitung
- 51: dritte Entlüftungsleitung
- 52: vierte pneumatische Leitung
- 53: vierte Entlüftungsleitung
- 54: erste Druckmessleitung
- 56: zweite Druckmessleitung
- 60: Fahrzeug
- 62: Nutzfahrzeug
- 64: Vorderachse
- 65a, 65b: rechtes und linkes Rad
- 66: Hinterachsen
- 68: Zentralmodul
- 70: Fahrzeug-BUS
- 72: erste Bremsleitung
- 74: zweite Bremsleitung

## Patentansprüche

1. Elektropneumatisches Bremssteuermodul (1), mit
einem Vorratsanschluss (2) zum Anschließen eines Druckluftvorrats (3);
einem ersten Radbremsanschluss (4) und einem zweiten Radbremsanschluss (6);
einer pneumatisch gesteuerten Einlass-Auslass-Ventileinheit (8) zum Aussteuern eines ersten Bremsdrucks (PB1) an dem ersten Radbremsanschluss (4) und eines zweiten Bremsdrucks (PB2) an dem zweiten Radbremsanschluss (6), der unabhängig vom ersten Bremsdruck (PB1) ist; und
einer elektropneumatischen Vorsteuereinheit (10) zum Aussteuern wenigstens eines Hauptsteuerdrucks (PH) an einem Hauptventil (12) der Einlass-Auslass-Ventileinheit (10),
wobei das Hauptventil (12) der Einlass-Auslass-Ventileinheit (10) als pneumatisch steuerbares 3/2-Wegeventil (13) mit einem Hauptventil-Steueranschluss (12.4) ausgebildet ist, **dadurch gekennzeichnet, dass** das Hauptventil (12) einen mit dem Vorratsanschluss (2) verbundenen Hauptventil-Vorratsanschluss (12.1), einen Hauptventil-Arbeitsanschluss (12.2) zum Aussteuern eines Arbeitsdrucks (PA), und einen mit einer Entlüftung (5) verbundenen Hauptventil-Entlüftungsanschluss (12.3) aufweist.

2. Elektropneumatisches Bremssteuermodul (1) nach Anspruch 1, wobei in einer ersten drucklosen Schaltstellung der Hauptventil-Arbeitsanschluss (12.2) mit dem Hauptventil-Entlüftungsanschluss (12.3) verbunden ist, und in einer zweiten Schaltstellung der Hauptventil-Arbeitsanschluss (12.2) mit dem Hauptventil-Vorratsanschluss (12.1) verbunden ist.

3. Elektropneumatisches Bremssteuermodul (1) nach einem der vorstehenden Ansprüche, wobei die Einlass-Auslass-Ventileinheit (8) ein erstes Bremsventil (14) zum Aussteuern des ersten Bremsdrucks (PB1) und ein zweites Bremsventil (16) zum Aussteuern des zweiten Bremsdrucks (PB2) aufweist.

4. Elektropneumatisches Bremssteuermodul (1) nach Anspruch 2 und 3, wobei
das erste Bremsventil (14) einen mit dem Hauptventil-Arbeitsanschluss (12.2) des Hauptventils (12) verbundenen ersten Bremsventilanschluss (14.1) und einen mit dem ersten Radbremsanschluss (4) verbundenen zweiten Bremsventilanschluss (14.2) aufweist; und
das zweite Bremsventil (16) einen mit dem Hauptventil-Arbeitsanschluss (12.2) des Hauptventils (12) verbundenen dritten Bremsventilanschluss (16.1) und einen mit dem zweiten Radbremsanschluss (6) verbundenen vierten Bremsventilanschluss (16.2) aufweist.

5. Elektropneumatisches Bremssteuermodul (1) nach Anspruch 4, wobei das erste Bremsventil (14) einen mit der Vorsteuereinheit (10) verbundenen ersten Bremsventilsteueranschluss (14.3) aufweist, an dem ein erster Steuerdruck (P1) durch die Vorsteuereinheit (10) aussteuerbar ist.

6. Elektropneumatisches Bremssteuermodul (1) nach Anspruch 5, wobei in einer ersten drucklosen Schaltstellung des ersten Bremsventils (14) der erste Bremsventilanschluss (14.1) mit dem zweiten Bremsventilanschluss (14.2) verbunden ist, und das erste Bremsventil (14) in einer zweiten Schaltstellung geschlossen ist.

7. Elektropneumatisches Bremssteuermodul (1) nach einem der Ansprüche 4 bis 6, wobei das zweite Bremsventil (16) einen mit der Vorsteuereinheit (10) verbundenen zweiten Bremsventilsteueranschluss (16.3) aufweist, an dem ein zweiter Steuerdruck (P2) durch die Vorsteuereinheit (10) aussteuerbar ist.

8. Elektropneumatisches Bremssteuermodul (1) nach Anspruch 7, wobei in einer ersten drucklosen Schaltstellung des zweiten Bremsventils (16) der dritte Bremsventilanschluss (16.1) mit dem vierten Bremsventilanschluss (16.2) verbunden ist, und das zweite Bremsventil (16) in einer zweiten Schaltstellung geschlossen ist.

9. Elektropneumatisches Bremssteuermodul (1) nach einem der vorstehenden Ansprüche, wobei die Vorsteuereinheit (10) ein Haupt-Steuerventil (18) aufweist, das einen mit dem Vorratsanschluss (2) verbundenen ersten Haupt-Steuerventilanschluss (18.1), einen mit dem Hauptventil-Steueranschluss (12.4) verbundenen zweiten Haupt-Steuerventilanschluss (18.2) und einen mit einer Entlüftung (5) verbundenen dritten Haupt-Steuerventilanschluss (18.3) aufweist.

10. Elektropneumatisches Bremssteuermodul (1) nach Anspruch 5, wobei die Vorsteuereinheit (10) ein erstes Brems-Steuerventil (20) für den ersten Bremsdruck (PB1) aufweist, das einen mit dem Vorratsanschluss (2) verbundenen ersten Brems-Steuerventilanschluss (20.1), einen mit dem ersten Bremsventilsteueranschluss (14.3) verbundenen zweiten Brems-Steuerventilanschluss (20.2) und einen mit einer Entlüftung (5) verbundenen dritten Brems-Steuerventilanschluss (20.3) aufweist.

11. Elektropneumatisches Bremssteuermodul (1) nach Anspruch 7, wobei die Vorsteuereinheit (10) ein zweites Brems-Steuerventil (22) für den zweiten Bremsdruck (PB2) aufweist, das einen mit dem Vorratsanschluss (2) verbundenen vierten Brems-Steuerventilanschluss (22.1), einen mit dem zweiten Bremsventilsteueranschluss (16.3) verbundenen fünften Brems-Steuerventilanschluss (22.2) und einen mit einer Entlüftung (5) verbundenen sechsten Brems-Steuerventilanschluss (22.3) aufweist.

12. Elektropneumatisches Bremssteuermodul (1) nach einem der vorstehenden Ansprüche, aufweisend eine elektrische Steuereinheit (ECU) mit einem elektrischen Anschluss (30) zum Empfangen von Bremssignalen (SB) und zum Bereitstellen entsprechender Schaltsignale (SH, S1, S2) wenigstens an die Vorsteuereinheit (10).

13. Elektropneumatisches Bremssteuermodul (1) nach einem der vorstehenden Ansprüche, aufweisend einen ersten Drucksensor (24), der dazu vorgesehen ist, den ersten Bremsdruck (PB1) zu erfassen und ein entsprechendes erstes Drucksignal (SP1) bereitzustellen, sowie einen zweiten Drucksensor (26), der dazu vorgesehen ist, den zweiten Bremsdruck (PB2) zu erfassen und ein entsprechendes zweites Drucksignal (SP2) bereitzustellen.

14. Verfahren zum Betrieb eines Elektropneumatisches Bremssteuermoduls (1) nach einem der vorstehenden Ansprüche, mit den Schritten:
- Empfangen eines Bremssignals (SB);
in Abhängigkeit des empfangenen Bremssignals (SB):
- Aussteuern eines ersten Bremsdrucks (PB1) an dem ersten Radbremsanschluss (4); und
- Aussteuern eines zweiten Bremsdrucks (PB2) an dem zweiten Radbremsanschluss (6), der unabhängig vom ersten Bremsdruck (PB1) ist.

15. Fahrzeug (60), insbesondere Nutzfahrzeug (62), mit einem elektropneumatischen Bremssteuermodul (1) nach einem der Ansprüche 1 bis 13 geeignet zur Durchführung eines Verfahrens nach Anspruch 14.

## Claims

1. An electropneumatic brake control module (1), comprising
a supply connection (2) for connecting a compressed air supply (3);
a first wheel brake connection (4) and a second wheel brake connection (6);
a pneumatically controlled inlet-outlet valve unit (8) for controlling a first brake pressure (PB1) at the first wheel brake connection (4) and a second brake pressure (PB2) at the second wheel brake connection (6), which is independent of the first brake pressure (PB1); and
an electropneumatic pilot control unit (10) for controlling at least one main control pressure (PH) at a main valve (12) of the inlet-outlet valve unit (10),
wherein the main valve (12) of the inlet-outlet valve unit (10) is a pneumatically controllable 3/2-way valve (13) with a main valve control connection (12. 4), **characterized in that** the main valve (12) comprises the main valve supply connection (12.1) connected to the supply connection (2), a main valve working connection (12.2) for controlling a working pressure (PA), and a main valve venting connection (12.3) connected to a vent (5).

2. The electropneumatic brake control module (1) according to claim 1, wherein in a first pressureless switching position, the main valve working connection (12.2) is connected to the main valve venting connection (12.3), and in a second switching position, the main valve working connection (12.2) is connected to the main valve supply connection (12.1).

3. The electropneumatic brake control module (1) according to any of the foregoing claims, wherein the inlet-outlet valve unit (8) has a first brake valve (14) for controlling the first brake pressure (PB1) and a second brake valve (16) for controlling the second brake pressure (PB2).

4. The electropneumatic brake control module (1) according to claim 2 and 3, wherein
the first brake valve (14) has a first brake valve connection (14.1) connected to the main valve working connection (12.2) of the main valve (12) and a second brake valve connection (14.2) connected to the first wheel brake connection (4); and
the second brake valve (16) has a third brake valve connection (16.1) connected to the main valve working connection (12.2) of the main valve (12) and a fourth brake valve connection (16.2) connected to the second wheel brake connection (6).

5. The electropneumatic brake control module (1) according to claim 4, wherein the first brake valve (14) has a first brake valve control connection (14.3) connected to the pilot control unit (10), at which a first control pressure (P1) can be controlled by the pilot control unit (10).

6. The electropneumatic brake control module (1) according to claim 5, wherein in a first pressureless switching position of the first brake valve (14), the first brake valve connection (14.1) is connected to the second brake valve connection (14.2), and in a second switching position, the first brake valve (14) is closed.

7. The electropneumatic brake control module (1) according to any of claims 4 to 6, wherein the second brake valve (16) has a second brake valve control connection (16. 3) connected to the pilot control unit (10), at which a second control pressure (P2) can be controlled by the pilot control unit (10).

8. The electropneumatic brake control module (1) according to claim 7, wherein in a first pressureless switching position of the second brake valve (16), the third brake valve connection (16.1) is connected to the fourth brake valve connection (16.2), and in a second switching position, the second brake valve (16) is closed.

9. The electropneumatic brake control module (1) according to any of the foregoing claims, wherein the pilot control unit (10) has a main control valve (18), which has a first main control valve connection (18.1) connected to the supply connection (2), a second main control valve connection (18.2) connected to the main valve control connection (12.4) and a third main control valve connection (18.3) connected to a vent (5) .

10. The electropneumatic brake control module (1) according to claim 5, wherein the pilot control unit (10) has a first brake control valve (20) for the first brake pressure (PB1), which has a first brake control valve connection (20.1) connected to the supply connection (2), a second brake control valve connection (20.2) connected to the first brake valve control connection (14.3), and a third brake control valve connection (20.3) connected to a vent (5).

11. The electropneumatic brake control module (1) according to claim 7, wherein the pilot control unit (10) has a second brake control valve (22) for the second brake pressure (PB2), which has a fourth brake control valve connection (22.1) connected to the supply connection (2), a fifth brake control valve connection (22.2) connected to the second brake valve control connection (16.3) and a sixth brake control valve connection (22.3) connected to a vent (5).

12. The electropneumatic brake control module (1) according to any of the foregoing claims, further comprising an electrical control unit (ECU) with an electrical connection (30) for receiving braking signals (SB) and for providing corresponding switching signals (SH, S1, S2) at least to the pilot control unit (10).

13. The electropneumatic brake control module (1) according to any of the foregoing claims, further comprising a first pressure sensor (24), which is provided to detect the first brake pressure (PB1) and to provide a corresponding first pressure signal (SP1), as well as a second pressure sensor (26) which is provided to detect the second brake pressure (PB2) and to provide a corresponding second pressure signal (SP2).

14. A method for operating an electropneumatic brake control module (1) according to any of the foregoing claims comprising the steps of:
- receiving a braking signal (SB);
depending on the received braking signal (SB):
- controlling a first brake pressure (PB1) at the first wheel brake connection (4); and
- controlling a second brake pressure (PB2) at the second wheel brake (6), which is independent of the first brake pressure (PB1) .

15. A vehicle (60), in particular a commercial vehicle (62), with an electropneumatic brake control module (1) according to any of claims 1 to 13 suitable for carrying out a method according to claim 14.

## Revendications

1. Module de commande de frein électropneumatique (1), comprenant
un raccord de réserve (2) pour le raccordement d'une réserve d'air comprimé (3) ;
un premier raccord de frein de roue (4) et un deuxième raccord de frein de roue (6) ;
une unité de vanne d'entrée-sortie (8) commandée de manière pneumatique pour la commande d'une première pression de freinage (PB1) sur le premier raccord de frein de roue (4) et d'une deuxième pression de freinage (PB2) sur le deuxième raccord de frein de roue (6), qui est indépendante de la première pression de freinage (PB1) ; et
une unité pilote (10) électropneumatique pour la commande d'au moins une pression de commande principale (PH) sur une vanne principale (12) de l'unité de vanne d'entrée-sortie (10),
dans lequel la vanne principale (12) de l'unité de vanne d'entrée-sortie (10) est réalisée sous la forme d'un distributeur à 3/2 voies (13) pouvant être commandé de manière pneumatique avec un raccord de commande de vanne principale (12.4), **caractérisé en ce que** la vanne principale (12) présente un raccord de réserve de vanne principale (12.1) relié au raccord de réserve (2), un raccord de travail de vanne principale (12.2) pour la commande d'une pression de travail (PA), et un raccord de ventilation de vanne principale (12.3) relié à une ventilation (5).

2. Module de commande de frein électropneumatique (1) selon la revendication 1, dans lequel dans une première position de commutation exempte de pression le raccord de travail de vanne principale (12.2) est relié au raccord de ventilation de vanne principale (12.3), et dans une deuxième position de commutation le raccord de travail de vanne principale (12.2) est relié au raccord de réserve de vanne principale (12.1).

3. Module de commande de frein électropneumatique (1) selon l'une quelconque des revendications précédentes, dans lequel l'unité de vanne d'entrée-sortie (8) présente une première vanne de freinage (14) pour la commande de la première pression de freinage (PB1) et une deuxième vanne de freinage (16) pour la commande de la deuxième pression de freinage (PB2).

4. Module de commande de frein électropneumatique (1) selon la revendication 2 et 3, dans lequel
la première vanne de freinage (14) présente un premier raccord de vanne de freinage (14.1) relié au raccord de travail de vanne principale (12.2) de la vanne principale (12) et un deuxième raccord de vanne de freinage (14.2) relié au premier raccord de frein de roue (4) ; et
la deuxième vanne de freinage (16) présente un troisième raccord de vanne de freinage (16.1) relié au raccord de travail de vanne principale (12.2) de la vanne principale (12) et un quatrième raccord de vanne de freinage (16.2) relié au deuxième raccord de frein de roue (6).

5. Module de commande de frein électropneumatique (1) selon la revendication 4, dans lequel la première vanne de freinage (14) présente un premier raccord de commande de vanne de freinage (14.3) relié à l'unité pilote (10), sur lequel une première pression de commande (P1) peut être commandée par l'unité pilote (10).

6. Module de commande de frein électropneumatique (1) selon la revendication 5, dans lequel dans une première position de commutation exempte de pression de la première vanne de freinage (14) le premier raccord de vanne de freinage (14.1) est relié au deuxième raccord de vanne de freinage (14.2), et la première vanne de freinage (14) est fermée dans une deuxième position de commutation.

7. Module de commande de frein électropneumatique (1) selon l'une quelconque des revendications 4 à 6, dans lequel la deuxième vanne de freinage (16) présente un deuxième raccord de commande de vanne de freinage (16.3) relié à l'unité pilote (10), sur lequel une deuxième pression de commande (P2) peut être commandée par l'unité pilote (10).

8. Module de commande de frein électropneumatique (1) selon la revendication 7, dans lequel dans une première position de commutation exempte de pression de la deuxième vanne de freinage (16) le troisième raccord de vanne de freinage (16.1) est relié au quatrième raccord de vanne de freinage (16.2), et la deuxième vanne de freinage (16) est fermée dans une deuxième position de commutation.

9. Module de commande de frein électropneumatique (1) selon l'une quelconque des revendications précédentes, dans lequel l'unité pilote (10) présente une vanne de commande principale (18), qui présente un premier raccord de vanne de commande principale (18.1) relié au raccord de réserve (2), un deuxième raccord de vanne de commande principale (18.2) relié au raccord de commande de vanne principale (12.4) et un troisième raccord de vanne de commande principale (18.3) relié à une ventilation (5).

10. Module de commande de frein électropneumatique (1) selon la revendication 5, dans lequel l'unité pilote (10) présente une première vanne de commande de freinage (20) pour la première pression de freinage (PB1), qui présente un premier raccord de vanne de commande de freinage (20.1) relié au raccord de réserve (2), un deuxième raccord de vanne de commande de freinage (20.2) relié au premier raccord de commande de vanne de freinage (14.3) et un troisième raccord de vanne de commande de freinage (20.3) relié à une ventilation (5).

11. Module de commande de frein électropneumatique (1) selon la revendication 7, dans lequel l'unité pilote (10) présente une deuxième vanne de commande de freinage (22) pour la deuxième pression de freinage (PB2), qui présente un quatrième raccord de vanne de commande de freinage (22.1) relié au raccord de réserve (2), un cinquième raccord de vanne de commande de freinage (22.2) relié au deuxième raccord de commande de vanne de freinage (16.3) et un sixième raccord de vanne de commande de freinage (22.3) relié à une ventilation (5) .

12. Module de commande de frein électropneumatique (1) selon l'une quelconque des revendications précédentes, présentant une unité de commande électrique (ECU) avec un raccord électrique (30) pour la réception de signaux de freinage (SB) et pour la fourniture de signaux de commutation (SH, S1, S2) correspondants au moins à l'unité pilote (10).

13. Module de commande de frein électropneumatique (1) selon l'une quelconque des revendications précédentes, présentant un premier capteur de pression (24), qui est destiné à détecter la première pression de freinage (PB1) et à fournir un premier signal de pression (SP1) correspondant, ainsi qu'un deuxième capteur de pression (26), qui est destiné à détecter la deuxième pression de freinage (PB2) et à fournir un deuxième signal de pression (SP2) correspondant.

14. Procédé permettant le fonctionnement d'un module de commande de frein électropneumatique (1) selon l'une quelconque des revendications précédentes, comprenant les étapes :
- de réception d'un signal de freinage (SB) ;
en fonction du signal de freinage (SB) reçu :
- de commande d'une première pression de freinage (PB1) sur le premier raccord de frein de roue (4) ; et
- de commande d'une deuxième pression de freinage (PB2) sur le deuxième raccord de frein de roue (6), qui est indépendante de la première pression de freinage (PB1).

15. Véhicule (60), en particulier véhicule utilitaire (62), avec un module de commande de frein électropneumatique (1) selon l'une quelconque des revendications 1 à 13 adapté à la mise en œuvre d'un procédé selon la revendication 14.
